# EUROPEAN PATENT SPECIFICATION

(11) **EP 1 980 482 B1**
(45) Date of publication and mention of the grant of the patent: **21.09.2011**
(21) Application number: 07007542.9
(22) Date of filing: 12.04.2007
(51) Int. Cl.: B62L 1/00, B62M 23/02, F16D 55/08, B60B 27/02

(54) **Bicycle wheel driving device**
Radantriebsvorrichtung für ein Fahrrad
Dispositif d'entraînement de roue de bicyclette

(43) Date of publication of application: 15.10.2008
(73) Proprietor: SHIMANO INC., Osaka 590-8577 (JP)
(72) Inventor: Matsueda, Kenji, Sakai City Osaka 590-8577 (JP)
(74) Representative: Harrison, Robert John

(56) References cited:
- EP-A- 1 391 325
- EP-A- 1 595 783
- EP-A- 1 712 811
- EP-A- 1 733 957
- EP-A- 1 759 978
- EP-A1- 1 510 448
- EP-A2- 1 495 879

## Description

The present invention relates to a bicycle wheel driving device comprising an adapter for mounting a hub brake to a hub. The adapter is preferably a roller brake mounting adapter for mounting a roller brake to a hub shell of a hub preferably equipped with an internal motor.

Bicycling is becoming an increasingly more popular form of recreation as well as a means of transportation. Furthermore, bicycling has become a very popular competitive sport for both amateurs and professionals. Whether the bicycle is used for recreation, transportation or competition, the bicycle industry is constantly improving the various components of the bicycle. In recent years, bicycles equipped with a motor or the like are becoming increasingly popular to supplement the power imparted by pedaling (motor-assisted bicycles). In particular in China, there is a marked increase in the popularity of electric powered bicycles that have an electric motor built into a hub of a wheel. These electric motors are configured either to assist with the rotation of the wheels or to drive the rotation of the wheels altogether such that the bicycle moves forward even if the rider does not pedal.

In general, electric power bicycles are heavier because they require an electric motor and a battery serving as a power source. They can also travel at higher speeds than regular (non-motorized) bicycles because they are driven or assisted by the electric motor. Further, the inertia forces of electric powered bicycles are higher than those of normal (non-motorized) bicycles. Thus, mounting of brakes on motor-equipped hubs is problematic. Document EP 1 733 957 is directed at this problem. It discloses a roller brake mounting adapter for mounting a roller brake to a hub shell of a bicycle hub equipped with an internal motor. The adapter comprises a flange part and a cylindrical part. The flange part is configured to be mounted to a side end section of a hub shell of the hub. The cylindrical part has a first contact surface and a second contact surface. The first contact surface is provided on an internal circumferential surface of the cylindrical part and configured to contact a bearing serving to rotatably support the hub shell on a shaft of the hub. The second contact surface is provided on an external circumferential surface of the cylindrical part and has a plurality of protrusions that are spaced apart in a circumferential direction. The second contact surface is configured to contact a brake drum of a roller brake. In order to fix and secure the adapter to the hub shell of the hub, it is necessary to screw a plurality of screws into a plurality of holes formed on the flange part. The procedure of installing or mounting is time-consuming and cumbersome.

Document EP 1 595 783 discloses a bicycle wheel driving device according to the preamble of claim 1.

In view of the above, it will be apparent to those skilled in the art from this disclosure that there exists a need for an improved adapter. This invention addresses this need in the art as well as other needs, which will become apparent to those skilled in the art from this disclosure.

### SUMMARY OF THE INVENTION

An object of the present invention is to provide a bicycle wheel driving device having a hub brake mounting adapter which has a simple structure and which allows for an easy and smooth installation with respect to a hub shell and a hub brake.

The object is basically achieved by providing a bicycle wheel driving device according to claim 1.Further, the hub brake mounting adapter is, when assembled with the hub and the hub brake, hardly viewable from the outside. Thus, the appearance of the construction is not affected by the hub brake mounting adapter.

Preferably, the plurality of first protrusions is adapted to be press-fitted into the mating structure provided on the hub shell.

In a preferred embodiment, the first protrusions are a continuation of the second protrusions. That is, the portion between the first and second axial end sides of the adapter, which extends in circumferential direction of the adapter, is omitted.

Preferably, at least a portion of the first axial end side of the adapter is arrangable between the bearing and the mating structure provided on the hub shell.

In preferred embodiment, a spacer is arrangable on the axial outside of the bearing between the hub shaft and the adapter.

Preferably, the adapter includes a portion between the first and the second axial end sides of the adapter wherein the portion extends in circumferential direction of the adapter and is configured for contacting an axial outside of the hub shell.

The hub brake mounting adapter may be formed and modified in the above described manner.

These and other objects, features and advantages of the present invention will become apparent to those skilled in the art from the following detailed description which, taken in conjunction with the annexed drawings, discloses a preferred embodiment of the present invention.

### BRIEF DESCRIPTION OF THE DRAWINGS

- Figure 1: is a side view of a bicycle equipped with the present invention;
- Figure 2: is a perspective view of an adapter used in the bicycle wheel driving device according to a first embodiment of the present invention;
- Figure 3: is a front view of the adapter;
- Figure 4: is a rear view of the adapter;
- Figure 5: is a side view of the adapter;
- Figure 6: is an exploded perspective view of the adapter and parts of a bicycle hub construction;
- Figure 7: is a schematic cross sectional view of the adapter and the parts of the bicycle hub construction, shown in Figure 6, illustrated in an assembled state;
- Figure 8: is a cross sectional view of a bicycle wheel driving device including the adapter, parts of the bicycle hub construction and a hub brake, according to the present invention.
- Figure 9: is a side view of the hub brake engagable with the adapter.
- Figure 10: is a perspective view of an adapter not part of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

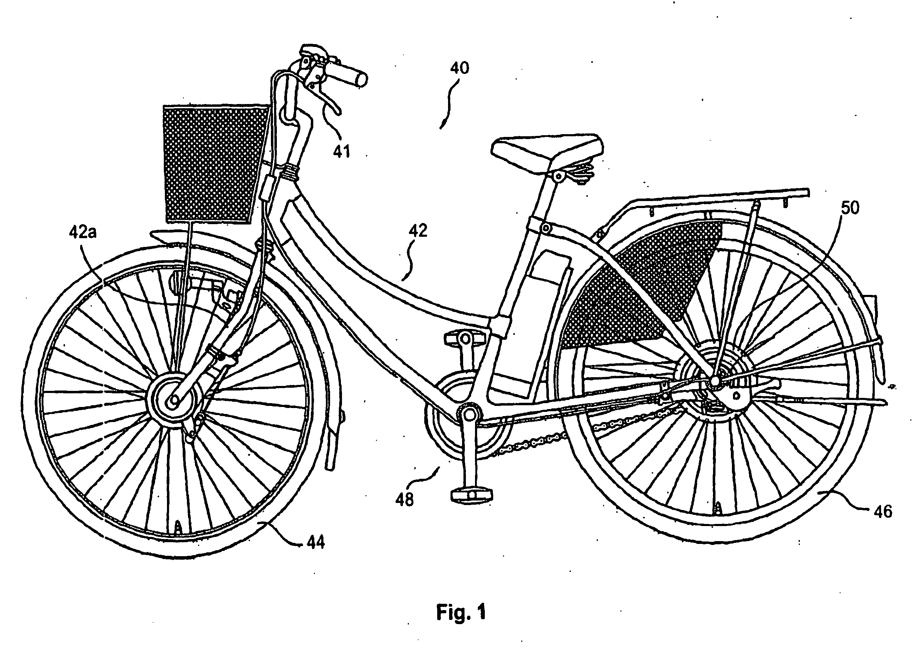

Referring initially to Figure 1, a bicycle 40 is illustrated that is equipped with the present invention. The bicycle 40 includes amongst other things a frame 42 with a front fork 42a, a front wheel 44, a rear wheel 46 and a manually powered drive train 48. The front and rear wheels 44 and 46 are arranged on the front and rear of the frame 42 with the manually powered drive train 48 arranged to drive the rear wheel 46 using human power. The manually powered drive train 48 includes at least one front sprocket and at least one rear sprocket, a chain and a crank set. A hub 50 preferably equipped with a motor is installed at the centre of the rear wheel 46 for driving the rear wheel 46 using particularly an electric motor.

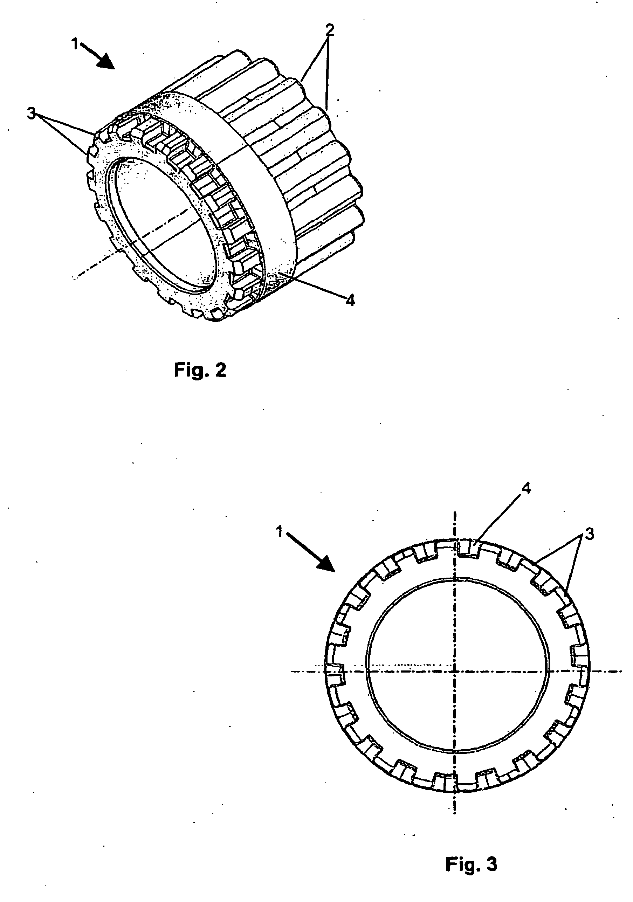

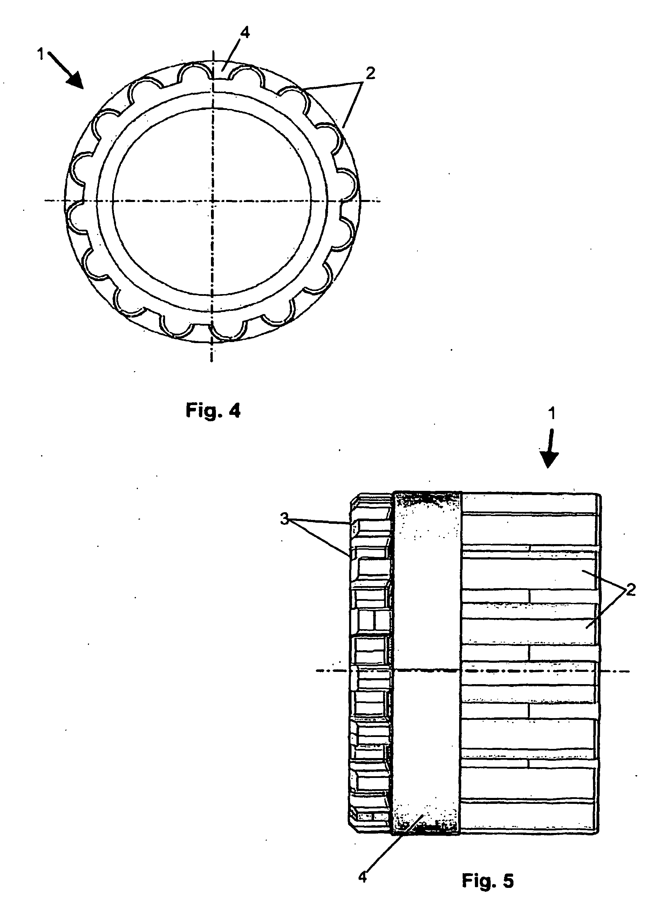

Figures 2-5 illustrate an adapter 1 in different views. Figure 2 is a perspective view of the adapter 1 used in the bicycle wheel driving device according to a first embodiment of the present invention. The adapter I is a tubular member. It has a first contact surface 5 (not directly visible in Figure 2) that is provided on an internal circumferential surface of the adapter 1 and configured for contacting a bearing 21. The adapter 1 further includes a first engaging structure 2 and a second engaging structure 3. The first engaging structure is provided in the form of a plurality of first protrusions 2. The second engaging structure is provided in the form of a plurality of second protrusions 3. The plurality of first protrusions 2 is provided on an external circumferential surface of the adapter 1 on a first axial end side (right hand side of the adapter 1 in Figures 2 and 5) of the adapter 1. The plurality of first protrusions 2 is configured for engaging with a mating structure 23 provided on a hub shell 20 (not shown in Figures 2-5), preferably on an internal circumferential surface of the hub shell 20.

The plurality of second protrusions 3 is provided on the external circumferential surface of the adapter 1 on a second axial end side (left hand side of the adapter 1 in Figures 2 and 5) of the adapter 1. The plurality of second protrusions 3 is configured for engaging with a mating structure 31 provided on a hub brake 30 (not shown in Figures 2-5) (preferably on an internal circumferential surface of a brake drum of a roller brake).

The first engaging structure can, for example, be provided in the form of a toothing, serrations, splines or other protrusions spaced apart from one another and arrangable at the adapter 1. In the first embodiment, each protrusion of the plurality of first protrusions 2 is provided preferably in the form of substantially a half cylinder extending in the longitudinal direction of the adapter 1 (i.e. in the direction of the hub axle 22). In other words, the first protrusions 2 are preferably protrusions (bosses) having a cross section in the form of substantially a semicircle or semicircular surface.

The second engaging structure can, for example, be provided in the form of a toothing, serrations, splines or other protrusions spaced apart from one another and arrangable at the adapter 1. In the first embodiment, each protrusion of the plurality of second protrusions 3 is provided preferably in the form of substantially a rectangle or trapezoid extending in the longitudinal direction of the adapter 1 (i.e. in the direction of the hub axle 22). In other words, the second protrusions 3 are preferably protrusions having a cross section in the form of substantially a rectangle or rectangular surface, or trapezoid or trapezoid surface.

In the first embodiment, the adapter 1 includes a portion 4 between the first axial end side and the second axial end side of the adapter 1 that extends in the circumferential direction of the adapter 1. The portion 4 (protruding radially outwardly) is configured and arranged for contacting an axial outside of the hub shell 20. In an alternative embodiment, it is also possible that the first protrusions 2 are a continuation of the second protrusions 3, or vice versa. In other words, in alternative embodiments the portion 4 can be omitted.

Figure 3 is a front view of the adapter 1 showing in particular the plurality of second protrusions 3 spaced apart in the circumferential direction of the adapter 1, and one side of the portion 4.

Figure 4 is a rear view of the adapter 1 showing in particular the plurality of first protrusions 2 spaced apart in the circumferential direction of the adapter 1, and the other side of the portion 4.

Figure 5 is a side view of the adapter 1 showing in particular the plurality of first protrusions 2, the plurality of second protrusions 3 and the portion 4.

As shown in Figures 2-5, the plurality of first protrusions 2 and the plurality of second protrusions 3 are spaced apart in the circumferential direction of the adapter 1.

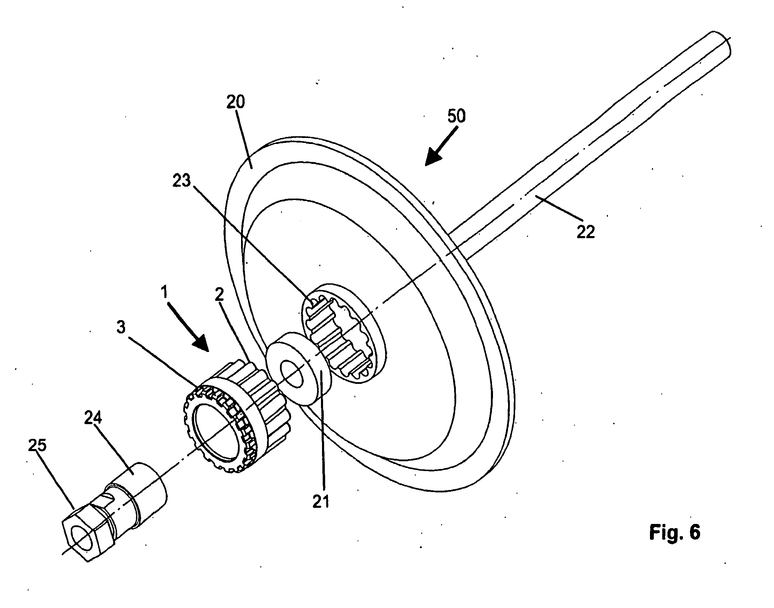

Figure 6 is an exploded perspective view illustrating the adapter 1 and parts of the hub 50. The hub 50 includes inter alia the hub shell 20, a bearing 21, the hub axle (shaft) 22, a spacer 24 and a fixing nut 25. The hub axle 22 is configured and arranged to be mounted to a rear end part of the frame 42. The bearing 21 is configured and arranged to rotatably support the hub shell 20 on the hub shaft 22. The hub shell 20 includes the mating structure 23 preferably provided on an internal circumferential surface of the hub shell 20. The mating structure 23 is configured to engage (mesh) with the plurality of first protrusions 2 provided on the first axial end side of the adapter 1. The plurality of first protrusions 2 is adapted to be press-fitted into the mating structure 23 provided on the hub shell 20. At least a portion of the first axial end side of the adapter 1 is adapted to be arranged between the bearing 21 and the mating structure 23 provided on the hub shell 20. The spacer 24 is adapted to be arranged on the axial outside of the bearing 21 between the hub shaft 22 and the adapter 1.

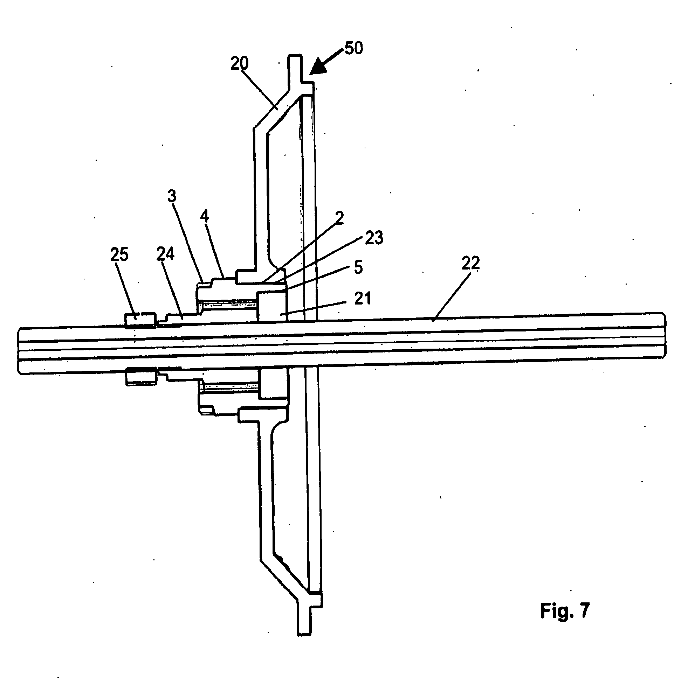

Figure 7 shows the adapter 1 engaged with the hub shell 20. That is, the plurality of first protrusions 2 is engaged (meshed) with the mating structure 23 provided on the hub shell 20 in a press-fitted manner. The bearing 21, the spacer 24, the adapter 1, the fixing nut 25 and the hub shell 20 are arranged around the hub shaft 22. At least a portion of the first axial end side of the adapter 1 is arranged between the mating structure 23 provided on the hub shell 20 and the bearing 21. The bearing 21 is arranged between the first contact surface 5 provided on the internal circumferential surface of the adapter 1 on the first axial end side of the adapter 1 and the hub axle 22. The bearing 21 contacts the first contact surface 5 of the adapter 1 and the hub shaft 22.

As shown in Figure 7, the portion 4 contacts an axial outside of the hub shell 20. The spacer 24 is arranged between the adapter 1 and the hub axle 22 (with respect to a radial direction of the hub axle 22) and arranged between the fixing nut 25 and the bearing 21 (with respect to an axial direction of the hub axle 22).

The plurality of second protrusions 3 is configured for engaging with a mating structure 31 provided on a hub brake 30 (not shown in Figure 7).

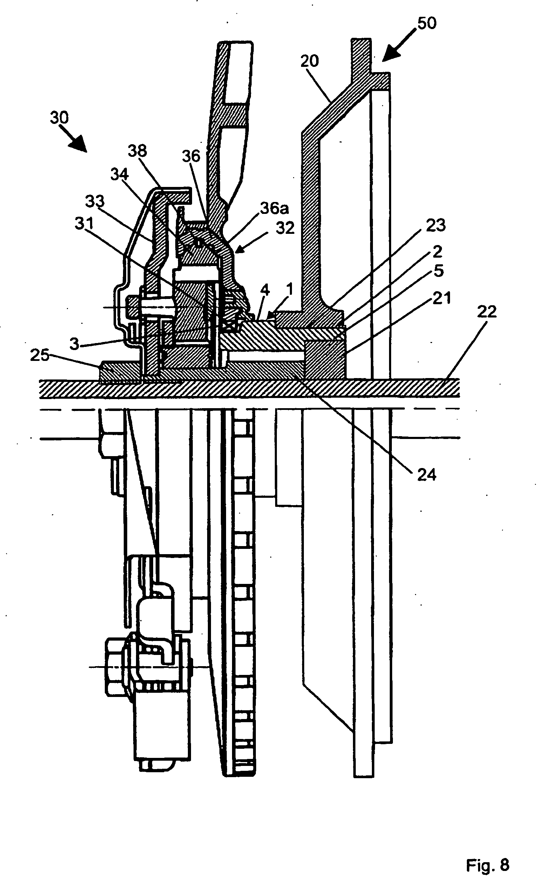

Figure 8 shows a bicycle wheel driving device including the hub shell 20, the hub shaft 22, the adapter 1, the spacer 24, the fixing nut 25 and the hub brake 30, according the first embodiment of the present invention. The parts are shown in an assembled state. Preferably, an internal motor (not shown) is disposed inside the hub shell 20 of the hub 50 and configured to rotate it. The adapter 1 is used to couple the hub brake 30 to the hub shell 20.

In a preferred embodiment, the hub brake 30 is a roller brake. However, it will become apparent to those skilled in the art from this disclosure that other types of brakes are usable with the present invention.

The roller brake 30 substantially includes a brake drum 32, a stationary bracket 33, a plurality of brake shoes 34 and a brake operating unit 35 (not shown in Figure 8). The brake shoes 34 are configured and arranged to press against the brake drum 32 and apply braking force. The brake drum 32 includes a ring-shaped drum main body 36 and optionally a cooling disk. The drum main body 36 has a braking surface 36a on a first internal circumferential surface. The optional cooling disk could be fixed to the external circumference of the drum main body 36. The stationary bracket 33 is fixed with respect to the hub axle 22 and secured to the frame 42. The stationary bracket 33 serves to prevent the brake shoes 34 from rotating and to pivotally support the brake operating unit 35. The brake shoes 34 are arranged as a ring-shaped member that is divided into, for example, three sections. The brake shoes 34 are arranged so as to be prevented from rotating by the stationary bracket 33. The brake shoes 34 are spring-loaded in a direction of separation from the braking surface 36a by a return spring 38. The return spring 38 is an annular spring member made of an elastic wire-like material that has been bent into a circular shape.

The brake operating unit 35 serves to press the brake shoes 34 against the braking surface 36a in opposition to the spring load force imposed by the return spring 38 against the brake shoes 34. As known to persons skilled in the art, the brake operating unit 35 generally includes an operating arm, a cam member or mechanism, a plurality of rollers and a roller case. The operating arm is mounted to the stationary bracket 33 in such a manner that it can rock freely. The cam mechanism is configured and arranged to pivot integrally with the operating arm. The rollers are arranged between the cam member and the brake shoes 34 so as to touch both the cam member and the brake shoes 34 and be spaced apart from one another in the circumferential direction. The roller case is configured to hold the rollers at the circumferential spacing.

An inner cable 39a of a brake cable 39 (not shown in Figure 8) is connected to one end of the operating arm. The other end of the inner cable 39a is connected to a brake lever 41 (Figure 1) mounted to a handlebar. The cam member has, for example, six slanted surfaces on the external circumference thereof that serve to push the rollers radially outward when the cam member turns.

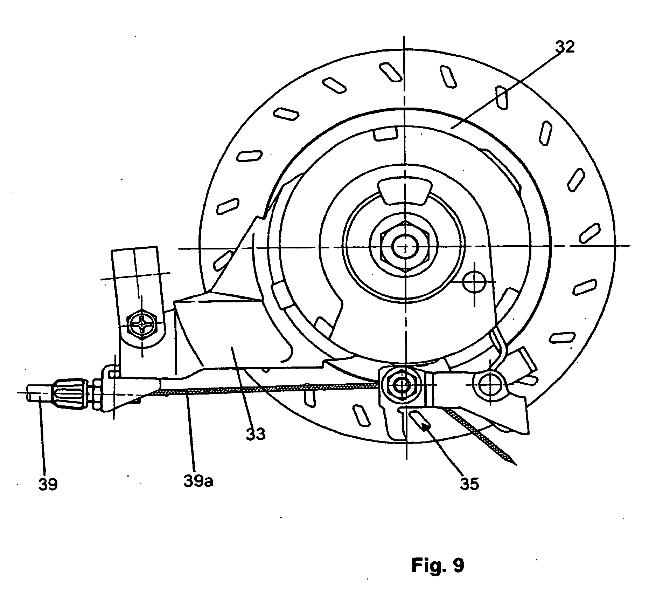

When the brake lever 41 is operated and the inner cable 39a is pulled (moved leftward when view from the perspective of Figure 9), the operating arm swings clockwise (from the perspective of Figure 9) about the hub axle 22 and the cam member turns integrally with the movement of the operating arm. As a result, the rollers are moved radially outward and the brake shoes 34 are pressed against the braking surface 36a of the brake drum 32. When the brake lever 41 is released, the inner cable 39a returns to its original position and the operating arm swings counterclockwise (from the perspective of Figure 9). As a result, the pressing of the rollers is released and the return spring 38 moves the brake shoes 34 radially inward away from the braking surface 36a.

It will become apparent to those skilled in the art from this disclosure that the hub brake 30 is not limited to a roller brake construction as discussed above.

As further shown in Figure 8, the first contact surface 5 of the adapter 1 contacts the bearing 21 serving to rotatably support the hub shell 20 on the hub shaft 22. The plurality of first protrusions 2 provided on the external circumferential surface of the adapter 1 on the first axial end side is engaged (meshed) with the mating structure 23 provided on the hub shell 20 on an internal circumferential surface of the hub shell 20 in a press-fitted manner. At least a portion of the first axial end side of the adapter 1 is arranged between the mating structure 23 provided on the hub shell 20 and the bearing 21. The bearing 21 is arranged between the first contact surface 5 provided on the internal circumferential surface of the adapter 1 on the first axial end side thereof and the hub shaft 22. The portion 4 contacts the axial outside of the hub shell 20. The spacer 24 is arranged between the adapter 1 and the hub axle 22 (with respect to the radial direction of the hub axle 22) and arranged between the fixing nut 25 and the bearing 21 (with respect to an axial direction of the hub axle 22). The fixing nut 25 screwed onto the hub axle 22 serves for fixing the arrangement.

The plurality of second protrusions 3 of the adapter 1 is engaged (meshed) with a mating structure 31 provided on the hub brake 30. The mating structure 31 is preferably provided on a second internal circumferential surface of the drum main body 36 of the roller brake 30. Thus, the hub shell 20 and the drum main body 36 (brake drum 32) can rotate integrally by means of the adapter 1.

The adapter 1 provides for a simple structure and enables an easy mounting/coupling of a hub brake to a hub shell of a hub preferably equipped with an internal motor, although the construction is able to withstand large braking forces.

Figure 9 is a side view of the hub brake 30 in the form of a roller brake showing the brake drum 32, the stationary bracket 33, the brake operating unit 35, the brake cable 39 and the inner cable 39a.

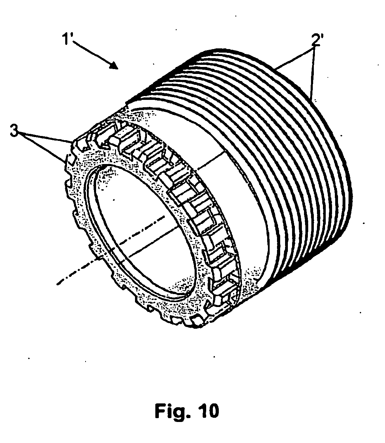

Figure 10 is a perspective view of an adapter which is not part of the present invention. In view of the similarity of the first and second embodiments, the parts of the second embodiment that are identical to the parts of the first embodiment will be given the same reference signs as the parts of the first embodiment. Furthermore, the descriptions of the parts of the second embodiment that are identical to the parts of the first embodiment may be omitted for the sake of brevity.

The adapter 1' according to the second embodiment includes a first contact surface 5 provided on an internal circumferential surface of the adapter 1' and configured for contacting a bearing 21 adapted to rotatably support a hub shell 20 on a hub shaft 22. The adapter 1' further comprises a first engaging structure 2' and a second engaging structure 3. The first engaging structure 2' is provided on an external circumferential surface of the adapter 1' on a first axial end side thereof and configured for engaging with a mating structure 23' (not shown) provided on the hub shell 20. The second engaging structure 3 is provided on the external circumferential surface of the adapter 1' on a second axial end side thereof and configured for engaging with a mating structure 31 provided on a hub brake 30.

The first engaging structure 2' provided on the adapter 1' is an external thread. The mating structure 23' provided on the hub shell 20 is an internal thread. The adapter 1' can be easily mounted by screwing the first engaging structure 2' of the adapter 1' into the mating structure 23' of the hub shell 20.

The adapter 1' is usable with the hub 50 (hub shell 20) and the hub brake 30 in the same manner as the adapter 1. Thus, the descriptions of the hub 50 and the hub brake 30 are omitted for the sake of brevity.

Although the described embodiments relates to a bicycle wheel driving device comprising a hub brake mounting adapter that is mounted to a hub, preferably equipped with a motor, installed on a rear wheel, the present invention can also be applied to a hub brake mounting adapter that is mounted to hub installed on a front wheel.

While only selected embodiments have been chosen to illustrate the present invention, it will apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims. Thus, the scope of the invention is not limited to the disclosed embodiments.

## Claims

1. A bicycle wheel driving device comprising
a hub shaft (22);
a hub shell (20) having a mating structure (23; 23') provided on an internal circumferential surface thereof;
a hub brake (30) having a mating structure (31) provided on an internal circumferential surface thereof;
and
an adapter (1; 1') having
a first contact surface (5) provided on an internal circumferential surface of the adapter (1; 1') and configured to contact a bearing (21) adapted to rotatably support the hub shell (20) on the hub shaft (22);
a first engaging structure (2; 2') provided on an external circumferential surface of the adapter (1; 1') on a first axial end side thereof, the first engaging structure (2; 2') is configured to engage with the mating structure (23; 23') provided on the hub shell (20); and
a second engaging structure (3) provided on the external circumferential surface of the adapter (1; 1') on a second axial end side thereof, the second engaging structure (3) is configured to engage with the mating structure (31) provided on the hub brake (30),
the first engaging structure is provided in the form of a plurality of first protrusions (2), and the second engaging structure is provided in the form of a plurality of second protrusions (3),
the plurality of first protrusions defining a first outer envelope having a first diameter and the plurality of protrusions defining a second outer envelope having a second diameter, **characterized in that** the first diameter of the first outer envelope is substantially the same as second diameter of the second outer envelope and
the plurality of first protrusions (2) and the plurality of second protrusions (3) is spaced apart in circumferential direction of the adapter (1; 1').

2. The bicycle wheel driving device according to claim 1, wherein
the plurality of first protrusions (2) is press-fitted into the mating structure (23) of the hub shell (20).

3. The bicycle wheel driving device according to any one of claims 1-2, wherein
the first protrusions (2) are a continuation of the second protrusions (3).

4. The bicycle wheel driving device according to any one of claims 1-3, wherein
at least a portion of the first axial end side of the adapter (1; 1') is arranged between the bearing (21) and the hub shell (20).

5. The bicycle wheel driving device according to any one of claims 1-4, wherein
a spacer (24) is arranged on the axial outside of the bearing (21) between the hub shaft (22) and the adapter (1; 1').

6. The bicycle wheel driving device according to anyone of claims 1 to 5, wherein the adapter (1; 1') includes a portion (4) between the first and the second axial end sides of adapter (1; 1'), the portion (4) extends in circumferential direction of the adapter (1; 1') and is configured to contact an axial outside of the hub shell (20).

## Patentansprüche

1. Fahrradradantriebsvorrichtung, umfassend
eine Nabenwelle (22);
eine Nabenhülle (20), aufweisend eine Passstruktur (23; 23'), bereitgestellt an einer inneren oder internen umfänglichen Fläche davon;
eine Nabenbremse (30), aufweisend eine Passstruktur (31), bereitgestellt an einer inneren oder internen umfänglichen Fläche davon; und
einen Adapter (1; 1'), aufweisend
eine erste Kontaktfläche (5), bereitgestellt an einer inneren umfänglichen Fläche des Adapters (1; 1') und konfiguriert zum Berühren eines Lagers (21), ausgelegt zum drehbaren Stützen der Nabenhülle (20) an der Nabenwelle (22);
eine erste Eingriffsstruktur (2; 2'), bereitstellt an einer äußeren umfänglichen Fläche des Adapters (1; 1') an einer ersten axialen Endseite davon, wobei die erste Eingriffsstruktur (2; 2') konfiguriert ist zum Eingreifen mit der Passstruktur (23; 23'), bereitgestellt an der Nabenhülle (20); und
eine zweite Eingriffsstruktur (3), bereitgestellt an der externen oder äußeren umfänglichen Fläche des Adapters (1; 1') an einer zweiten axialen Endseite davon, wobei die zweite Eingriffsstruktur (3) konfiguriert ist zum Eingreifen mit der an der Nabenbremse (30) bereitgestellten Passstruktur (31),
wobei die erste Eingriffsstruktur in der Form einer Vielzahl von ersten Vorsprüngen (2) bereitgestellt ist, und wobei die zweite Eingriffstruktur in der Form einer Vielzahl von zweiten Vorsprüngen (3) bereitgestellt ist, wobei die Vielzahl von ersten Vorsprüngen einen ersten äußeren Mantel mit einem ersten Durchmesser definieren und die Vielzahl von zweiten Vorsprüngen einen zweiten äußeren Mantel definieren mit einem zweiten Durchmesser, **dadurch gekennzeichnet, dass** der erste Durchmesser des ersten äußeren Mantels im Wesentlichen gleich ist zu dem zweiten Durchmesser des zweiten äußeren Mantels und **dadurch**, dass die Vielzahl an ersten Vorsprüngen (2) und die Vielzahl an zweiten Vorsprüngen (3) in einer umfänglichen Richtung des Adapters (1; 1') beabstandet vorliegen.

2. Fahrradradantriebsvorrichtung nach Anspruch 1, bei welcher die Vielzahl an ersten Vorsprüngen (2) in die Passstruktur (23) der Nabenhülle (20) pressgepasst ist.

3. Fahrradradantriebsvorrichtung gemäß einem der Ansprüche 1 bis 2, bei welcher die ersten Vorsprünge (2) eine Fortsetzung der zweiten Vorsprünge (3) sind.

4. Fahrradradantriebsvorrichtung gemäß einem der Ansprüche 1 bis 3, bei welcher zumindest ein Abschnitt der ersten axialen Endseite des Adapters (1; 1') zwischen dem Lager (21) und der Nabenhülle (20) angeordnet ist.

5. Fahrradradantriebsvorrichtung gemäß einem der Ansprüche 1 bis 4, bei welcher ein Abstandshalter (24) an dem axial Äußeren des Lagers (21), zwischen der Nabenwelle (22) und dem Adapter (1; 1') angeordnet ist.

6. Fahrradradantriebsvorrichtung gemäß einem der Ansprüche 1 bis 5, bei welcher der Adapter (1; 1') einen Abschnitt (4) zwischen den ersten und zweiten axialen Endseiten des Adapter (1; 1') enthält, wobei der Abschnitt (4) sich in umfänglicher Richtung des Adapters (1; 1') erstreckt und konfiguriert ist zum Berühren einer axialen Außenseite oder eines axialen Äußeren der Nabenhülle (20).

## Revendications

1. Dispositif d'entrainement de roue de bicyclette comprenant:
un arbre de moyeu (22) ;
une coque de moyeu (20) ayant une structure de couplage conjuguée (23 ; 23') fournie sur une surface circonférentielle interne de celle-ci ;
un frein de moyeu (30) ayant une structure de couplage conjuguée (31) fournie sur une surface circonférentielle interne de celui-ci ;
et
un adaptateur (1 ; 1') ayant
une première surface de contact (5) fournie sur une surface circonférentielle interne de l'adaptateur (1 ; 1'), et configurée pour être en contact avec un palier (21) adapté pour supporter en rotation la coque de moyeu (20) sur l'arbre de moyeu (22) ;
une première structure d'engagement (2 ; 2') fournie sur une surface circonférentielle externe de l'adaptateur (1 ; 1'), sur un premier côté d'extrémité axial de celui-ci, la première structure d'engagement (2 ; 2') étant configurée pour être en engagement avec la structure de couplage conjuguée (23 ; 23') fournie sur la coque de moyeu (20) ;
et
une deuxième structure d'engagement (3) fournie sur la surface circonférentielle externe de l'adaptateur (1 ; 1') sur un deuxième côté d'extrémité axiale de celui-ci, la deuxième structure d'engagement (3) étant configurée pour s'engager avec la structure de couplage conjuguée (31) fournie sur le frein de moyeu (30) ;
la première structure d'engagement étant fournie en forme d'une pluralité de premières protrusions (2), et la deuxième structure d'engagement étant fournie en forme d'une pluralité de deuxièmes protrusions (3),
la pluralité de premières protrusions définissant une première enveloppe externe ayant un premier diamètre, et la pluralité de deuxièmes protrusions définissant une deuxième enveloppe externe ayant un deuxième diamètre,
**caractérisé en ce que**
le premier diamètre de la première enveloppe externe est sensiblement le même que le deuxième diamètre de la deuxième enveloppe externe, et
la pluralité de premières protrusions (2) et la pluralité de deuxièmes protrusions (3) sont espacées dans une direction circonférentielle de l'adaptateur (1 ; 1').

2. Dispositif d'entrainement de roue de bicyclette selon la revendication 1, dans lequel la pluralité de premières protrusions (2) est ajustée serré dans la structure de couplage conjuguée (23) de la coque de moyeu (20).

3. Dispositif d'entrainement de roue de bicyclette selon l'une quelconque des revendications 1 à 2, dans lequel les premières protrusions (2) sont une continuation des deuxièmes protrusions (3).

4. Dispositif d'entrainement de roue de bicyclette selon l'une quelconque des revendications 1 à 3, dans lequel au moins une partie du premier côté d'extrémité axial de l'adaptateur (1 ; 1') est agencée entre le palier (21) et la coque de moyeu (20).

5. Dispositif d'entrainement de roue de bicyclette selon l'une quelconque des revendications 1 à 4, dans lequel un écarteur (24) est agencé sur l'extérieur axial du palier (21), entre l'arbre de moyeu (22) et l'adaptateur (1 ; 1').

6. Dispositif d'entrainement de roue de bicyclette selon l'une quelconque des revendications 1 à 5, dans lequel l'adaptateur (1 ; 1') comprend une partie (4) entre les premier et deuxième côtés d'extrémité axiale de l'adaptateur (1 ; 1'), la partie (4) s'étendant dans une direction circonférentielle de l'adaptateur (1 ; 1') et étant configuré pour être en contact avec un extérieur axial de la coque de moyeu (20).
